# EUROPEAN PATENT APPLICATION

(11) **EP 4 567 501 A1**
(43) Date of publication of application: **11.06.2025**
(21) Application number: 23213988.1
(22) Date of filing: 04.12.2023
(51) Int. Cl.: G02C 7/04, B29D 11/00

(54) **CONTACT LENS STRUCTURE WITH COLORED PORTION HAVING AN APERTURE, AND METHOD OF FORMING CONTACT LENS STRUCTURE**

(71) Applicant: Azalea Vision BV, 9052 Ghent (BE)
(72) Inventor: Brans, Toon, 9052 Ghent (BE); Chesterman, Frédérique, 9052 Ghent (BE); Vermandel, Miguel, 9052 Ghent (BE); Vasquez Quintero, Andrés, 9052 Ghent (BE)
(74) Representative: AWA Sweden AB

(57) **Abstract**

The present invention relates to a method of forming a contact lens structure (1) is provided, the contact lens structure having a back surface (10) configured to, at least partly, be in contact with the eye (2) of a user when in use, and a front surface (20) opposite said back surface. The method comprises the steps of shaping the back surface (20) of the contact lens structure based on information of a shape of the eye of the user such that the contact lens structure (1) is rotationally and translationally stable when in use on the eye of the user; and providing a colored portion (30) in the contact lens structure (1) arranged between the back surface (10) and the front surface (20), wherein the colored portion (30) comprises a aperture (32). The invention further relates to a contact lens structure.

## Description

### Technical Field

The present disclosure relates to a method of forming a contact lens structure, and especially a contact lens structure with a colored portion having an aperture.

### Background

Within the field of contact lenses certain portions of the contact lens may in different situations be desired to be positioned at certain locations of the eye of a user when in use. This may be due to the user having a certain eye condition, or for creating other optical or aesthetic effects using the contact lens. However, it may be difficult to achieve such contact lens structure which is safe and reliable for the user, at the same time as it provides the positioning. Consequently, there is a need for a safe and reliable solution that provides a contact lens structure that achieves the desired effect.

### Summary

It is an object of the present invention to provide an improved solution that alleviates the mentioned drawbacks with present devices. Furthermore, it is an object to provide a method of forming a contact lens structure.

The invention is defined by the appended independent claims, with embodiments being set forth in the appended dependent claims, in the following description and in the drawings.

According to a first aspect of the invention a method of forming a contact lens structure is provided, the contact lens structure having a back surface configured to, at least partly, be in contact with the eye of a user when in use, and a front surface opposite said back surface. The method comprises the steps of shaping at least a portion of the back surface of the contact lens structure based on information of a shape of the eye of the user such that the contact lens structure is rotationally and translationally stable when in use on the eye of the user; and providing a colored portion in the contact lens structure arranged between the back surface and the front surface, wherein the colored portion comprises an aperture.

By forming the contact lens structure according to the present invention, there may be provided a solution that is reliable and safe for the user applying the contact lens to its eye to utilize a desired effect. The information of the shape of the eye of the user may be information that provides that the back surface may be shaped to conform to the shape of the eye in an extent necessary to make the contact lens structure rotationally and translationally stable when arranged on the eye of the user, also during blinking. The shape of the contact lens structure may thereby adjust to the shape of the eye and the shape of the back surface may provide that the contact lens structure may not move from a preferred location on the eye. The back surface may be formed based on the detailed shape information such that it may be designed in full freeform, i.e. fully customized shape based on the detailed shape of the eye, or conformal (following the exact shape of the eye), or in a quadrant specific shape (each 90° has their own shape specification), or in toric shape (two different curvatures matching the shape specification).

By providing the colored portion in the contact lens structure, between the back surface and the front surface, a colored portion which may not become in direct contact with the eye may be provided. Any biocompatibility issues or potential foreign body rejection may thereby be prevented. The use of such contact lens structure may thereby be safe for the user.

By colored portion it may be meant an area where a color is provided in any way to provide a desired function. The contact lens structure may have a size of up to 25 mm in diameter. The aperture may have a size of less than 5 mm in diameter, or between 1-5 mm in diameter. The aperture may have a non-circular shape. The size may then be correspondingly about 1-5 mm in width. The colored portion may have a size between 7-15 mm in diameter. The colored portion may be circular.

The shaping of the back surface according to the shape of the eye may provide that the position of the contact lens structure on the eye may be predetermined, such that it may be predetermined where on the eye a certain part of the contact lens structure will be positioned. For instance, it may be predetermined where the aperture may be positioned in relation to the cornea, the visual axis, or the optical axis of the eye when the contact lens structure is arranged to the eye, or in any other desired location or direction. The functionality of the colored portion with the aperture and the resulting effect may thereby be improved.

The optical axis is an imaginary line which intersects the center of the cornea and the center of the lens and meets the retina on the nasal side of the fovea. The pupillary axis is an imaginary line perpendicular to the cornea which intersects the center of the entrance pupil. Although the optical axis and pupillary axis may or may not be the same for a particular eye, in the remainder of this document, the term optical axis will be used to refer to both the optical axis and pupillary axis as defined in this paragraph.

The visual axis is an imaginary line that connects an object in space with the center of the fovea. The line of sight is an imaginary (broken) line that connects an object in space to the center of the entrance pupil, and the center of the exit pupil to the fovea. Although the visual axis and line of sight may or may not be the same for a particular eye, in the remainder of this document, the term visual axis will be used to refer to the visual axis and the line of sight, as defined in this paragraph.

Further, by rotationally and translationally stable it may be meant that the shape of the back surface provides that the contact lens structure, when arranged on the eye of the user, may not move or rotate unintentionally relative to the eye, but be sufficiently stable in position on the eye. Such rotation may be rotation around the optical axis or visual axis of the eye, or around an axis parallel thereto. By translational movement it may be meant movement of the contact lens structure along the surface plane of the eye.

The aperture in the colored portion may be positioned such that a preferred location of the aperture relative to the eye may be achieved when in use on the eye of the user. The user may experience a higher visual acuity (higher visual performance) when the contact lens structure is arranged on the eye, with the aperture located in a desired location relative to e.g. a preferred axis. The aperture may be located on the preferred axis (such as optical axis, visual axis, line of sight, pupillary axis) to achieve the desired effect.

By the contact lens structure being rotationally and translationally stable when arranged on the eye of the user, it may be meant that the contact lens structure and/or the aperture is located, when in use on the eye of the user, within a tolerance distance of a desired location on the eye of the user. Such tolerance distance may be lower than 1.5 mm. The shape information of the eye of the user, used for shaping the back surface of the contact lens structure, may comprise information at a detail level that provides that, when the contact lens structure is arranged on the eye of the user, a positioning of the contact lens structure within the tolerance distance is achieved, also during continuous use of the contact lens structure, such as during blinking. If the tolerance distance is too big, and the back surface is not shaped such that movement of the contact lens structure in relation to a desired location is not stable within the tolerance distance, the desired visual effect, such as visual acuity effect, of using the contact lens structure may disappear or be reduced.

The information of the shape of the eye of the user may be predetermined, and may have been achieved by e.g. a scanning operation or an eye impression taking operation. Such operation may provide the necessary information of the shape of the eye. The detail level of such shape determination operation may be set at a level providing the necessary details to enable a shaping of the back surface providing a rotational and translationally stable contact lens structure when arranged on the eye of the user, at any desired location on the eye. The shape information may be scleral topography or profilometry information of the eye of the user. The information of the shape of the eye of the user may be stored as digital data on a storage medium accessed and used with shaping the back surface of the contact lens structure. The stored digital data may be provided as a result of the shape determination operation.

By forming the back surface based on the shape information of the eye of the user, a very specific desired location of the contact lens structure on the eye when in use may be possible to achieve. For instance, it may be desired to have the contact lens structure, and/or the colored portion with the aperture, arranged offset a center position on the eye. By forming the back surface specifically with such shape that it fits on the desired location on the eye, such arrangement may be enabled. The shape information of the eye of the user may thereby need to be detailed enough to enable such positioning of the contact lens structure on the eye.

The contact lens structure may for instance be used for a scleral contact lens, a Rigid Gas Permeable, RGP, contact lens, a soft contact lens, or a hybrid contact lens.

The contact lens structure may comprise different radial zones. At the center of the contact lens structure, there may be an optical zone, radially followed by a transition zone, and thereafter a landing zone. The landing zone may be in contact with the eye when in use, while the optical zone and the transition zone may not be in contact with the eye. The light entering the eye of the user may pass through the optical zone of the contact lens structure. The aperture may thereby be positioned in the optical zone. The shape of the optical zone may be adapted to achieve a certain optical performance. Only a portion of the back surface may need to be shaped based on shape information of the eye of the user, especially a portion corresponding to the landing zone of the contact lens structure. Forming the back surface at the landing zone based on the shape information may be enough to provide a rotationally and translationally stable positioning of the contact lens structure on the eye when in use. The back surface in the optical zone may be formed for optical performance.

In some embodiments, the colored portion may comprise more than one aperture. The one or more apertures may be circular, or have other desired shapes. The one or more apertures may in shape and size provide the colored portion to be formed as a mask, providing a desired effect.

In one embodiment, the shape information of the eye may be eye scan information. The eye scan information may be topography information, tomography information or imprint information, of the eye. In more detail, such eye scan information may be provided by technologies such as profilometry scan, corneal and scleral topography (non-contact optical, contact mechanical, sound and air waves), Optical Coherence Tomography (OCT), Ultrasound imaging, Magnetic Resonance Imaging (MRI), Ultrasound Bio microscopy (UBM), Orbit Computed Tomography); print or impression-based technologies which later can be scanned. Using such shape information may enable adaption of the contact lens structure as close as possible to the shape of the eye. Further, in some embodiments, based on such eye scan information, the shaping of the back surface may be performed as a toric, quadrant specific or completely custom lens design (freeform).

In some embodiments, the method may further comprise a step of measuring the shape of the eye of the user to acquire the shape information. Such step of measuring may for instance comprise performing an eye scan of the eye of the user, providing eye scan information as discussed above.

In one embodiment, the method may further comprise a step of molding or casting the contact lens structure into a final shape, which may include the step of shaping the back surface.

In one embodiment, the colored portion may be a light blocking and/or light filtering portion surrounding the aperture. The colored portion may be provided with a coloring configured to block light to reach through the colored portion, either completely or partially, or to filter light in a desired manner. The aperture may be adapted in shape, location and size for the desired effect for the user. The aperture may be arranged in a center position of the colored portion, or alternatively offset a center position of the colored portion.

In one embodiment, the colored portion may be adapted in shape and size to cover at least a portion of the cornea of the eye of the user, when in use. In order to achieve a suitable effect, the colored portion may be configured to cover the whole cornea of the eye of the user, which may mean that the outer limit of the colored portion is configured to coincide with or go beyond the cornea of the eye. Light may thereby only reach the cornea of the eye of the user through the aperture. Alternatively, the colored portion may be adapted to cover a portion of the cornea of the eye when in use, preferably a center portion of the cornea.

In one embodiment, the colored portion may be provided in the contact lens structure such that the aperture is aligned with an optical axis, or a visual axis of the eye of the user. Alternatively, another desired location, possibly with reference to the optical or visual axis, may be desired and at which the aperture may be positioned.

In one embodiment, the position of the aperture may be determined based on the information of the shape of the eye of the user and/or optical properties of the eye. Such optical properties may be wavefront properties, which may have been measured through a wavefront measurement. The information of the shape of the eye may be used not only to form the back surface to ensure a rotationally and translationally stable arrangement of the contact lens structure on the eye, but also to determine the correct location of the colored portion and/or the location of the aperture. Alternatively or additionally, the position of the aperture may be based on optical properties of the eye of the user. Such optical properties may for instance be achieved by wavefront measurements or OCT. The colored portion may be arranged such that the aperture aligns with an optical axis or visual axis of the eye, based on the information of the shape of the eye, which may provide the necessary information to arrange the colored portion correctly. The arrangement of the colored portion and/or aperture may be made based on the shape of the back surface.

In one embodiment, the colored portion may be provided by painting a surface inside the contact lens structure, or by arranging a colored disc inside the contact lens structure. The colored portion is arranged between the back surface and the front surface. The colored portion may there be provided within the material of the contact lens structure. The contact lens structure may be provided as a layered structure, wherein the colored portion may be provided on or in one of the layers. The colored portion may be provided as painting on a surface, or a portion of a surface, in the contact lens structure. The colored portion may be painted as a painted area with an aperture in the center. Alternatively, the colored portion may be provided as a colored disc arranged inside the contact lens structure when forming the contact lens structure. Such colored disc may be provided on or in a layer of a layered structure of the contact lens structure. The colored disc may be colored as a colored area with an aperture.

In one embodiment, the contact lens structure may comprise a posterior layer and an anterior layer, wherein the back surface may be formed as part of the posterior layer and the front surface may be formed as part of the anterior layer, and wherein the colored portion may be provided between the posterior layer and the anterior layer. The contact lens structure may be formed as a layered structure having a posterior layer configured to be arranged closest to the eye of the user when in use, and an anterior layer configured to be remote to the eye when in use. When forming the contact lens structure, the colored portion may be formed between the posterior layer and the anterior layer. The contact lens structure may be formed by a molding process including the colored portion inside the structure. The contact lens structure may be formed by two or more preformed parts, such as the posterior layer and the anterior layer, attached to each other with the colored portion provided either in between the two parts, or provided inside one of the parts. Alternatively, the two layers may be arranged to each other with the colored portion provided in between or inside one of the parts, prior to forming the contact lens structure to the final shape, including the shaping of the back surface.

In one embodiment, the contact lens structure may be formed by the posterior layer and the anterior layer being attached to each other, and the colored portion may be provided at the interface between the two layers.

In one embodiment, the colored portion may be provided by arranging a colored disc sandwiched between the posterior layer and the anterior layer. When forming the contact lens structure as a layered structure, the colored disc may be arranged onto an inner surface of either of the layers, and sandwiched between the two layers when they are attached to each other to form the contact lens structure. Such arranging may be performed either prior to or after the shaping of the back surface.

In one embodiment, the colored portion may be provided by painting an area on an inner surface on either of the posterior layer and the anterior layer. The painting may be performed prior to attaching the two layers to each other. The painting may be provided at the interface between the two layers. The painting may provide the colored portion having the aperture.

In one embodiment, the contact lens structure may comprise an air chamber arranged inside the contact lens structure, and the colored portion may be provided in connection with the air chamber. An air chamber may be provided in some embodiments of contact lens structures to improve oxygen transportation to the eye. The colored portion may then be provided in connection with the air chamber. By 'in connection' it may be meant the colored portion is provided on a surface of the air chamber, a surface facing into the air chamber. The colored portion may be provided as a painted portion or an arranged disc on either the surface of the air chamber being adjacent to the back surface, or on the surface of the air chamber being adjacent the front surface.

In one embodiment, the contact lens structure may comprise one or more electronic components arranged inside the contact lens structure. The one or more electronic components may be arranged in connection with an air chamber as described above, an air chamber in connection of which the colored portion may be provided. The air chamber may improve oxygen transportation to the eye.

In one embodiment, the colored portion may be a pinhole shaped colored portion, and the aperture may be a pinhole opening, configured to provide a pinhole effect in the contact lens structure when arranged to the eye of the user. The pinhole opening may be provided in the contact lens structure to be aligned with an optical axis or visual axis of the eye of the user when arranged thereto, or any other direction, based on the shape information of the eye of the user.

In one embodiment, the colored portion may be formed as part of an electronic component provided in the contact lens structure. The colored portion may then be provided as a non-transparent portion of the electronic component, with the aperture provided as a transparent portion of the electronic component. The electronic component may comprise an electro-optical component configured to filter, disperse or in other way control the light that reaches the eye. Such electro-optical component may be a display component, such as a liquid crystal display (LCD) component, an electrochromic display or the like, that may form the colored portion and the aperture. In one embodiment when the colored portion and the aperture is formed as part of an electronic component, the electronic component may provide that the aperture is adjustable in size and/or shape. The electronic component may be positioned inside the contact lens structure based on the shape information. The position of the aperture may thereby be achieved at a desired location on the eye of the user when in use.

According to a second aspect of the invention, there is provided a contact lens structure comprising a back surface configured to, at least partly, be in contact with the eye of a user when in use, wherein the back surface is shaped based on information of a shape of the eye of the user such that the contact lens structure is rotationally and translationally stable when in use on the eye of the user; a front surface opposite said back surface; and a colored portion arranged between the back surface and the front surface, wherein the colored portion comprises an aperture. The contact lens structure may be a contact lens structure formed according to any one of the embodiments above. The contact lens structure may comprise features as discussed in any one of the embodiments above.

In one embodiment, the colored portion may comprise more than one aperture. The one or more apertures may be circular, or have any other desired shape. The one or more apertures may in shape and size provide the colored portion to be formed as a mask, providing a desired effect.

In one embodiment, the colored portion may be a painted surface with the aperture, or a colored disc with the aperture arranged inside the contact lens structure.

In one embodiment, the colored portion is arranged in the contact lens structure such that the aperture may be positioned at a desired location on the eye of the user when in use. Such desired location may for instance be aligned with an optical axis, or visual axis of the eye of the user. Alternatively, the desired location may be another location offset the optical or visual axis.

In one embodiment, the contact lens structure may comprise a posterior layer and an anterior layer, wherein the back surface may be part of the posterior layer and the front surface may be part of the anterior layer, and the colored portion may be arranged between the posterior layer and the anterior layer.

In one embodiment, the contact lens structure may comprise an air chamber arranged inside the contact lens structure, and the colored portion may be arranged in connection with the air chamber.

### Brief Description of the Drawings

The invention will in the following be described in more detail with reference to the enclosed drawings, wherein:
Fig. 1 shows a schematic side view of a contact lens structure and an eye according to an embodiment of the invention.
Fig. 2 shows a schematic top view of a colored portion according to an embodiment of the invention.
Fig. 3 shows a schematic side view of a contact lens structure according to an embodiment of the invention.
Fig. 4 shows a schematic side view of a contact lens structure according to an embodiment of the invention.
Fig. 5 shows a schematic top view of an eye and a contact lens structure according to an embodiment of the invention.
Fig. 6 shows a schematic top view of an eye and a contact lens structure according to an embodiment of the invention.
Fig. 7 shows a schematic top view of an eye and a contact lens structure according to an embodiment of the invention.
Fig. 8 shows a schematic top view of an eye and a contact lens structure according to an embodiment of the invention.
Fig. 9 shows a schematic top view of an eye and a contact lens structure according to an embodiment of the invention.
Fig. 10 shows a schematic top view of an eye and a contact lens structure according to an embodiment of the invention.
Fig. 11 shows a schematic top view of an eye and a contact lens structure according to an embodiment of the invention.
Fig. 12 shows a schematic top view of an eye and a contact lens structure according to an embodiment of the invention.
Fig. 13 shows schematic top views of colored portions of a contact lens structure according to an embodiment of the invention.
Fig. 14 shows schematic top views of colored portions of a contact lens structure according to an embodiment of the invention.
Fig. 15 shows a schematic top view of a colored portion of a contact lens structure according to an embodiment of the invention.
Fig. 16 shows schematic top views of colored portions of a contact lens structure according to an embodiment of the invention.
Figs. 17a-b shows schematic side views of contact lens structures according to embodiments of the invention.
Fig. 18 shows a flow chart of a method according to an embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

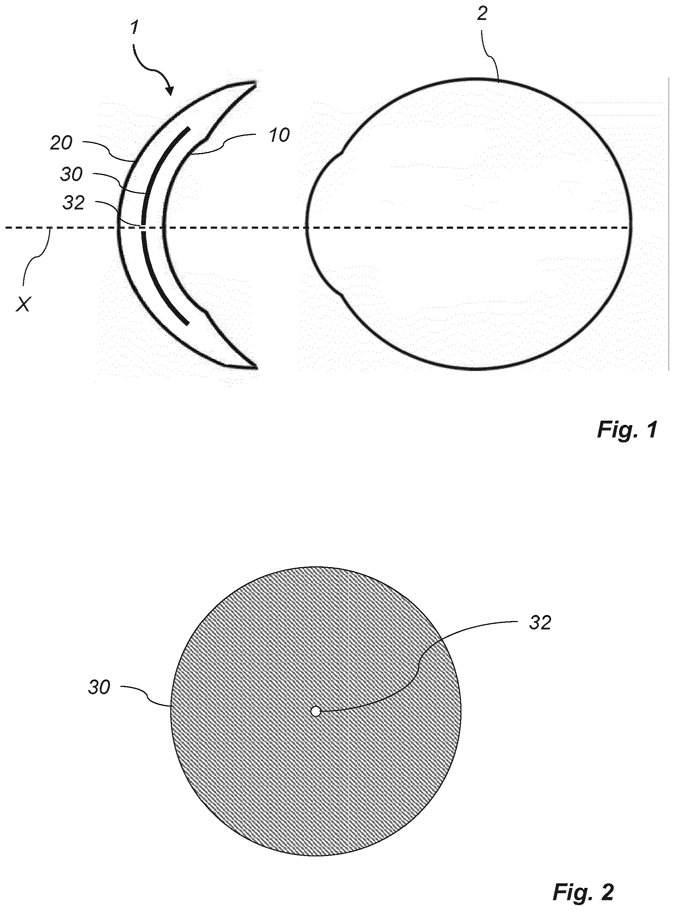

Fig. 1 illustrates a contact lens structure 1 according to an embodiment of the invention. The contact lens structure 1 comprises a back surface 10 configured to face the eye 2 of a user when in use. The contact lens structure 1 further comprises a front surface 20 opposite the back surface 10, and configured to face away from the eye 2 of the user when in use.

The back surface 10 of the contact lens structure 1 is formed based on information of the shape of the eye 2 of the user. The eye shape information may have been retrieved for instance by a scanning operation or an impression taking operation. The eye shape information thereby comprises specifics of the shape of the eye of a particular individual. When forming a contact lens structure 1 for that individual according to the present invention, the eye shape information is used to form at least a portion of the back surface 10 of the contact lens structure 1, such that the contact lens structure 1 is rotationally and translationally stable when in use on the eye 2 of the user.

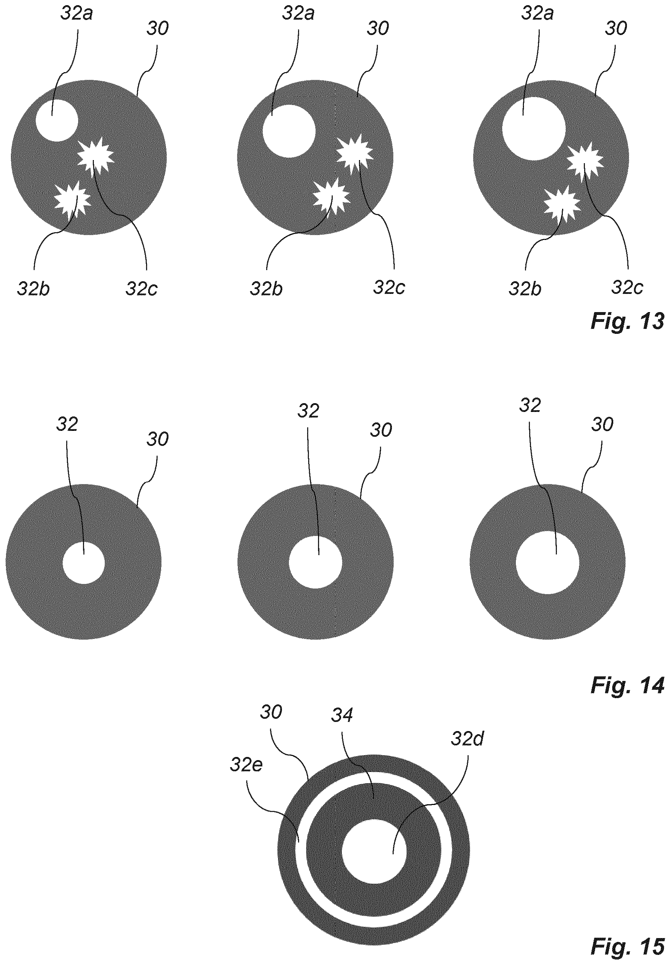

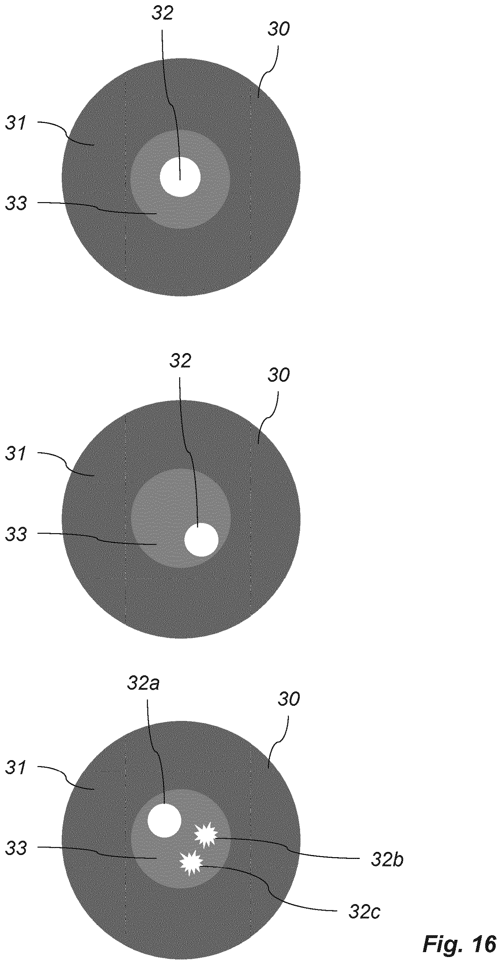

Between the back surface 10 and the front surface 20 of the contact lens structure 1 there is provided a colored portion 30. The colored portion 30 comprises an aperture 32 which may be provided in a center location of the colored portion 30 as in the illustrated embodiment. As seen below, the aperture 32 may alternatively have another location. The colored portion 30 may be circular or substantially circular as illustrated in fig. 2. The aperture may be between 1-5 mm in diameter depending on the desired functionality of the colored portion 30. The aperture 32 may alternatively have another irregular shape, for instance as illustrated in figs. 13 and 16. A colored portion 30 is illustrated in fig. 2 as circular with the aperture 32 provided in the center.

When forming the contact lens structure 1, the colored portion 30 is provided such that the aperture 32 is aligned with an optical axis X of the eye 2 of the user. The placement of the aperture 32 may thereby be based on the eye shape information and/or based on measured optical properties of the eye 2 of the user. In other embodiments, the aperture 32 may be aligned in another direction, such as aligned with a visual axis of the eye 2.

The colored portion 30 is provided as either a painted surface in the contact lens structure 1 or a colored disc arranged in the contact lens structure 1.

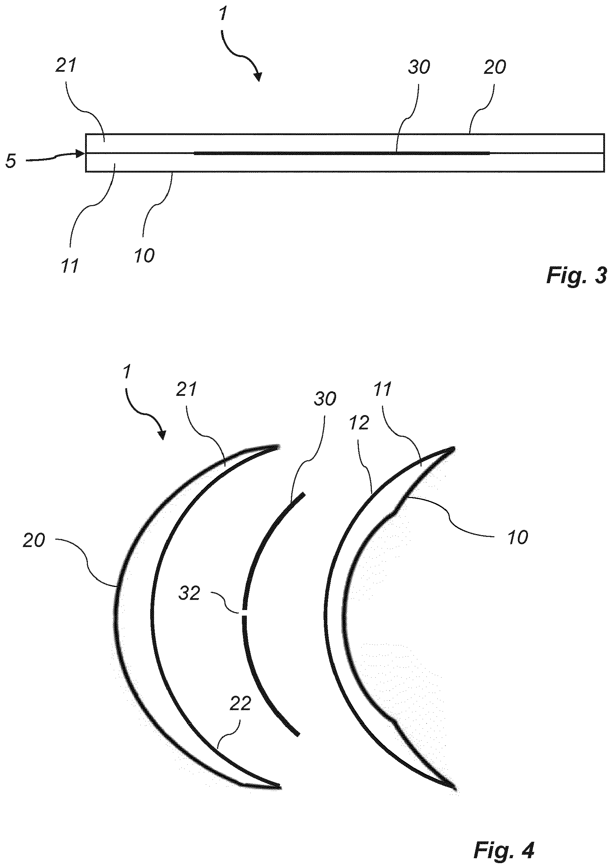

Fig. 3 illustrates an embodiment of the contact lens structure 1 formed as a layered structure prior to shaping thereof. The contact lens structure 1 comprises a posterior layer 11 having the back surface 10 as an outer surface, and an anterior layer 21 having the front surface 20 as an outer surface. Inner surfaces of the two layers 11, 21, opposite respective outer surfaces, faces each other and forms an interface 5 between the two layers 11, 21. The colored portion 30 is provided at the interface 5 either as a painted portion, painted on an inner surface of either of the two layers 11, 21, or as a colored disc arranged between the two layers 11, 21. After the colored portion 30 is provided at the interface 5 between the two layers 11, 21, the contact lens structure 1 is formed. In the forming process, the back surface 10 is formed based on the eye shape information of the eye 2 of the user. The remaining shaping of the contact lens structure 1 may be made based on a predetermined, or standard, shape of the contact lens structure 1.

In an alternative embodiment of a layered contact lens structure 1, illustrated in fig. 4, the posterior layer 11 with the back surface 10, and the anterior layer 21 with the front surface 20, are shaped prior to forming of the contact lens structure 1 by arranging the two layers 11, 21 together with the colored portion 30 in between. In the illustrated embodiment in fig. 4 the colored portion 30 is provided as a shaped disc, but may as well be provided as a painted portion on either of the two inner surfaces 12, 22 of the two layers 11, 21. The two inner surfaces 12, 22 forms the interface 5 between the two layers 11, 21.

The back surface 10 of the posterior layer 11 is at least partly formed based on the eye shape information of the eye 2 of the user. The inner surface 12 of the posterior layer 11 is formed with a predetermined shape, or partially formed based on the shape information of the eye. The inner surface 22 of the anterior layer 21 is formed with a predetermined shape configured to match the shape of the inner surface 12 of the posterior layer 11. The colored portion 30, if provided as a disc portion, is shaped to correspond to the predetermined shape of the inner surface 12 of the posterior layer 11, and thereby also the interface 5 between the two layers 11, 21.

The front surface 20 may, in any of the embodiments disclosed herein, be provided with a shape having desired optical characteristics. Further, in some embodiments, the back surface 10 may be shaped not only to provide a rotationally and translationally stable arrangement on the eye 2, but also to provide optical characteristics (optical power) to the contact lens structure 1. A portion of the back surface 10 may be formed to provide a rotationally and translationally stable arrangement on the eye 2, and another portion may be formed to provide desired optical performance. Typically, a landing zone of the back surface 10 may be formed based on the shape information of the eye 2, and an optical zone of the back surface 10 may be formed to provide a certain optical performance.

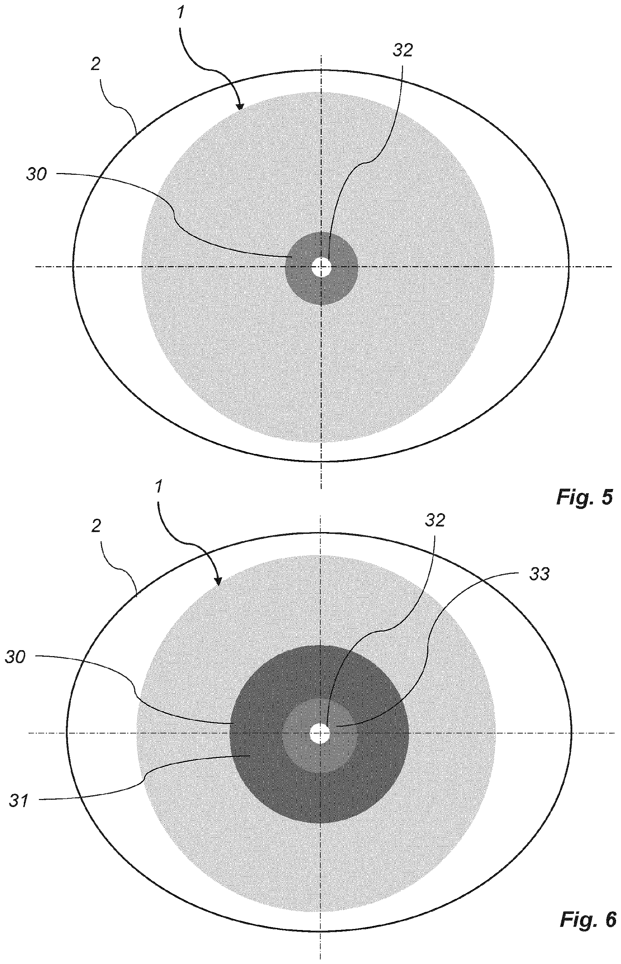

The colored portion 30 may be provided in different shapes and sizes, and with apertures 32 in different shapes, sizes and numbers, as seen in figs. 5-13.

Fig. 5 illustrates an embodiment of a contact lens structure 1 arranged on an eye 2, comprising a colored portion 30 having an aperture 32 at a center location of the eye 2. The center location may be aligned with an optical axis or visual axis of the eye 2. The colored portion provides an area, excluding the aperture 32, which at least partially blocks or filters light.

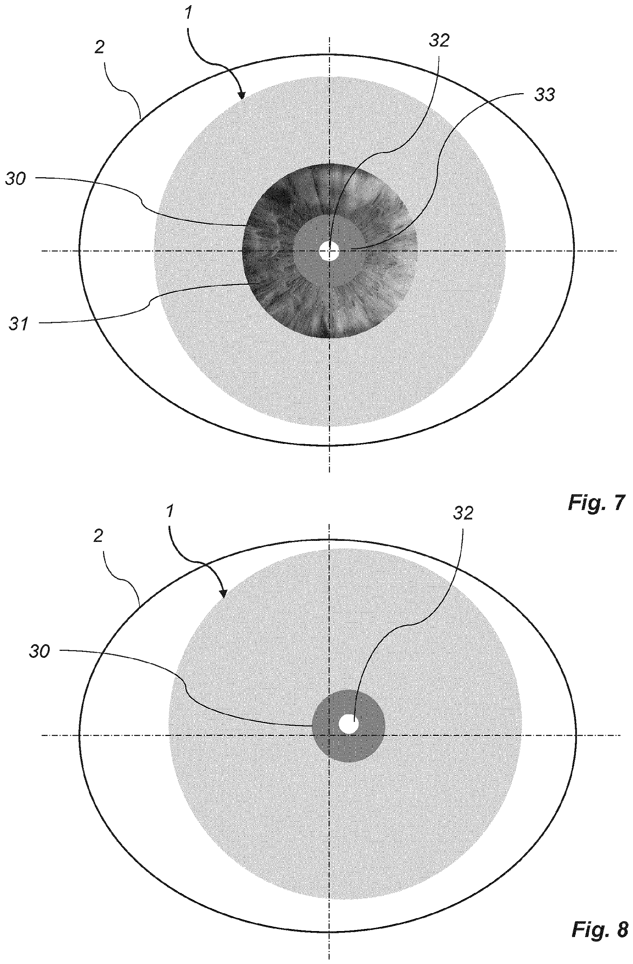

Fig. 6 illustrates an embodiment wherein the colored portion 30 comprises a radially outer iris portion 31 and an inner transition portion 33. The aperture 32 is arranged in the transition portion 33. The iris portion 31 may have a different optical function than the transition portion 33. The iris portion 31 may provide a light filtering and/or an aesthetic function. The iris portion 31 and/or the transition portion 33 may be at least partly translucent. Fig. 7 illustrates an iris portion 31 having an aesthetic function by being provided with a printed pattern. In the embodiments illustrated in figs. 5-7, the aperture 32 is provided at a center location of the eye 2. Further, the contact lens structure 1 and the colored portion 30 are centered on the eye. When forming the contact lens structure 1, the shape information of the eye 2 is used to determine the location of the colored portion 30 and the aperture 32 to provide them at the desired locations. Further, the shape information of the eye 2 may be used to form the back surface 10 such that the contact lens structure 1 becomes centered on the eye 2, in a rotationally and translationally stable manner, when arranged thereto.

The colored portion 30 may have a size of 7-15 mm in diameter. The iris portion 31, which constitute the outer diameter of the colored portion 30 may have an outer diameter of 7-15 mm. The transition portion 33 may have an outer diameter of 7-1 mm. The aperture 32 may have a diameter of less than 5 mm, or between 1-5 mm in diameter.

Fig. 8 illustrates an embodiment wherein the colored portion 30 is provided offset the center of the eye 2, such as offset with regard to the optical axis X of the eye 2. Equally, the aperture 32 then is offset the center of the eye 2 to instead be located at a desired position not being aligned with e.g. an optical or visual axis of the eye 2. Further, the whole contact lens structure 1 is arranged offset a center position on the eye 2. This may be provided by the shape information of the eye 2 being used to form the back surface 10 such that the contact lens structure 1 is not centered on the eye when in use.

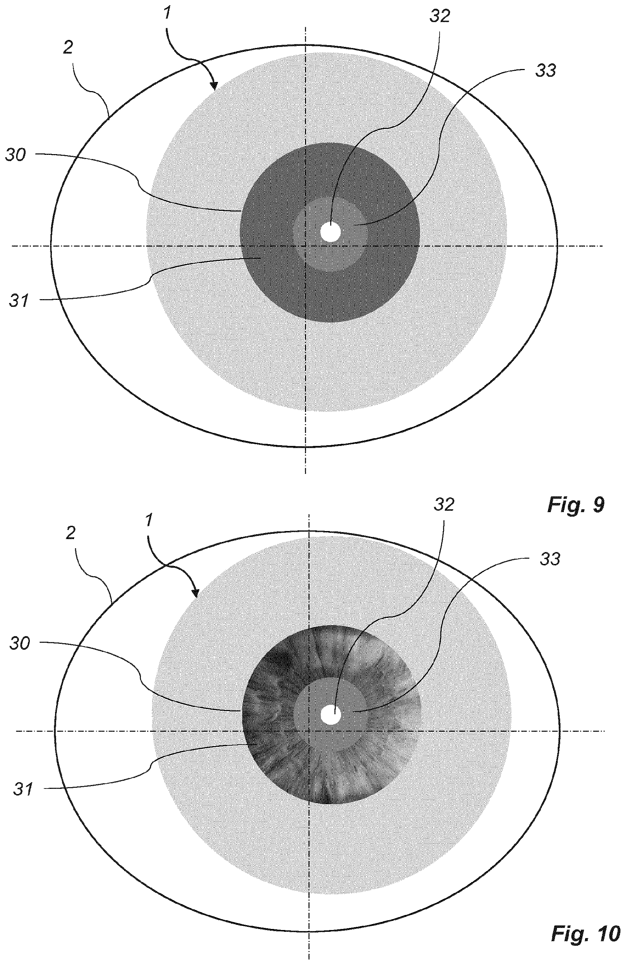

Figs. 9-10 illustrate similar embodiments as in fig. 8, wherein the colored portion 30 comprises an iris portion 31 and a transition portion 33, as discussed in relation to figs. 6-7, wherein the contact lens structure 1 and the colored portion 30 with its aperture 32 are offset the center of the eye 2.

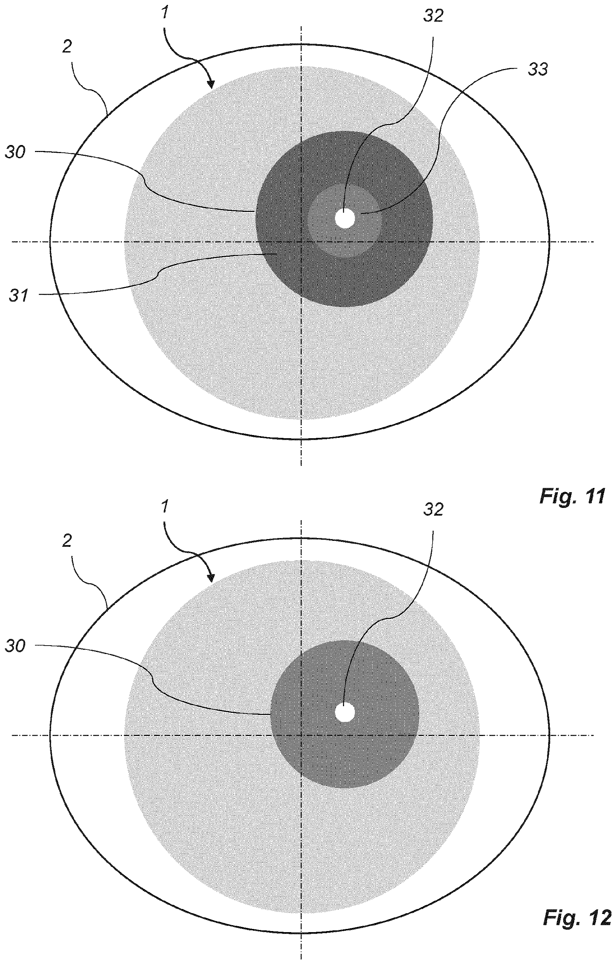

Figs. 11-12 illustrate two embodiments wherein the colored portion 30 is decentralized on the contact lens structure 1. In fig. 11 the colored portion 30 comprises an iris portion 31 and a transition portion 33, similar as in previously presented embodiments. In fig. 12, the colored portion 30 is provided as a single solid colored portion, with the aperture 32. In these embodiments, the contact lens structure 1 may be configured to be arranged centrally on the eye 2 and the colored portion 30 and the aperture 32 decentralized both on the eye 2 and in the contact lens structure 1. The center of the aperture 32 is thereby displaced or offset from the center of the contact lens structure 1. The decentralization of the colored portion 30 and the aperture 32 may be provided by the placement of the colored portion 30 and the aperture 32 in the contact lens structure 1 when forming the contact lens structure 1. In an embodiment wherein the colored portion 30 is provided between a posterior layer and an anterior layer of the contact lens structure 1, the placement of the colored portion 30 at the interface between the two layers may be chosen to provide the desired location of the colored portion 30, displaced or offset from the center of the contact lens structure 1. A decentralized colored portion 30 may be used for any type of colored portion 30 disclosed herein.

Fig. 13 illustrates three embodiments of colored portions 30 having a plurality of apertures 32. The plurality of apertures, in the illustrated embodiments three apertures 32, may have different shapes, sizes and locations. Depending on the desired effect of using the contact lens structure 1 having a colored portion 30 as disclosed herein, the numbers, sizes and shapes of the one or more apertures 32 may be determined.

Fig. 14 illustrates three embodiments of colored portions 30 having a single aperture 32, with different size in the three embodiments. The size may be selected based on the desired effect. The aperture 32 is typically between 1-5 mm in diameter.

Fig. 15 illustrates an embodiment of the colored portion 30 having two apertures 32d-e, wherein one aperture 32d is centralized on the colored portion 30, and one aperture 32e is a ring shaped aperture. In the illustrated embodiment the two apertures 32d-e are concentric, but may in other embodiments be arranged not concentrically. The two apertures 32d-e are radially separated by a colored separating portion 34, separating the two apertures 32d-e. The two concentric apertures 32d-e may be adapted in size and shape based on the desired optical function.

Fig. 16 illustrates three embodiments of colored portions 30 having an iris portion 31 and a transition portion 33 as previously discussed, and one or more apertures 32a-c having different sizes, locations and shapes. The number, shape, size and location of the one or more apertures 32a-c may be selected based on the desired effect of the contact lens structure 1 having the colored portion 30. The selection of one or more of these parameters may further be based on the shape information of the eye 2, measured optical properties of the eye, and/or the provided shape of the back surface 10 of the contact lens structure 1. As seen in fig. 13, the one or more apertures 32a-c may have other shapes than circular, such as a star shape. In other embodiments, the one or more apertures may have any other suitable shape. In embodiments where the colored portion 30 comprises an electronic component, the selection of one or more of the parameters may further be dynamically changed by means of the electronic component based on e.g. incoming light to the contact lens structure 1, activity of the user, controlled characteristics of the electronic component etc.

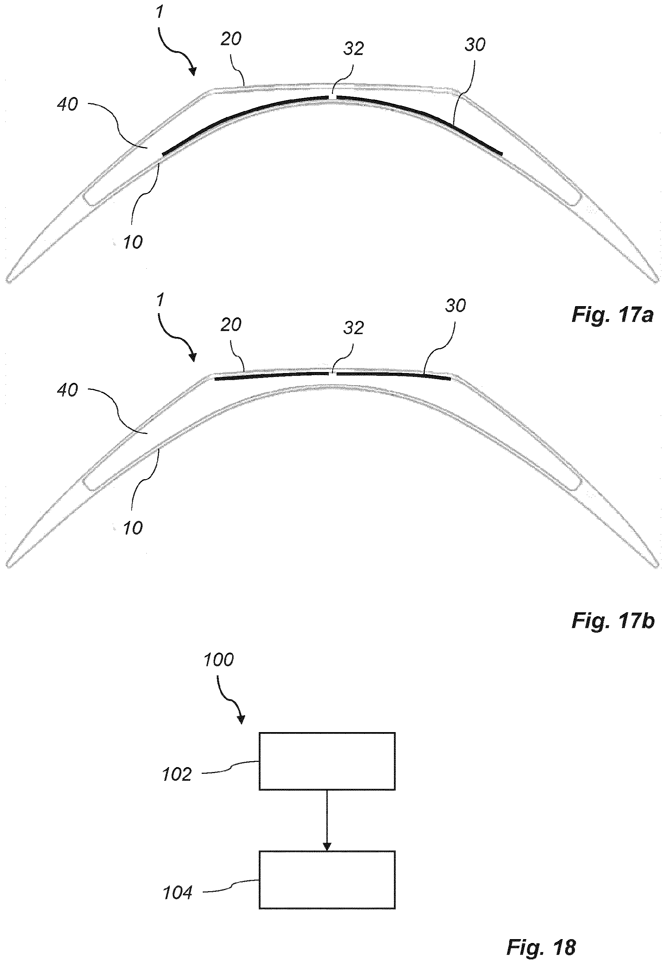

Figs. 17a and 17b illustrate embodiments wherein the contact lens structure 1 comprises an air chamber 40 inside the structure, between the back surface 10 and the front surface 20. In such embodiment, the material between the back surface 10 and the air chamber 40 may be defined as a posterior layer, and the material between the front surface 20 and the air chamber 40 may be defined as an anterior layer. In the illustrated embodiments, the colored portion 30 is provided in connection with the air chamber 40. In fig. 17a, the colored portion 30 is provided, either as a painted portion or as a disc shaped portion arranged therein, on a surface of the air chamber 40 adjacent to the posterior layer and the back surface 10. In fig. 17b, the color portion 30 is instead provided on a surface of the air chamber 40 adjacent to the anterior layer and the front surface 20.

Fig. 18 illustrates a schematic flowchart of a method according to an embodiment of the present invention, the method 100 comprising the steps of shaping 102 the back surface 10 of the contact lens structure 1 based on information of a shape of the eye of the user; and providing 104 a pinhole shaped colored portion in the contact lens structure 1 arranged between the back surface 10 and the front surface 20.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. Method (100) of forming a contact lens structure (1), the contact lens structure having a back surface (10) configured to, at least partly, be in contact with the eye (2) of a user when in use, and a front surface (20) opposite said back surface (10), the method comprising the steps of:
shaping (102) at least a portion of the back surface (10) of the contact lens structure (1) based on information of a shape of the eye (2) of the user such that the contact lens structure (1) is rotationally and translationally stable when in use on the eye of the user;
providing (104) a colored portion (30) in the contact lens structure (1) arranged between the back surface (10) and the front surface (20), wherein the colored portion comprises an aperture (32, 32a-e).

2. The method according to claim 1, wherein the shape information of the eye is topography information, tomography information, or imprint information of the eye (2).

3. The method according to claim 1 or 2, wherein the colored portion (30) is a light blocking and/or light filtering portion with the aperture (32, 32a-e).

4. The method according to any one of the preceding claims, wherein the colored portion (30) is provided in the contact lens structure (1) such that the aperture (32, 32a-e) is positioned at a desired location on of the eye of the user when in use.

5. The method according to claim 4, wherein the position of the aperture (32, 32a-e) in the contact lens structure (1) is provided based on the information of the shape of the eye (2) of the user and/or based on optical properties of the eye (2) of the user.

6. The method according to any one of the preceding claims, wherein the colored portion (30) is provided by painting a surface (12, 22) in the contact lens structure (1), or by arranging a colored disc inside the contact lens structure (1).

7. The method according to any one of the preceding claims, wherein the contact lens structure (1) comprises a posterior layer (11) and an anterior layer (21), wherein the back surface (10) is formed as part of the posterior layer (11) and the front surface (20) is formed as part of the anterior layer (21), and wherein the colored portion (30) is provided between the posterior layer (11) and the anterior layer (21).

8. The method according to claim 7, wherein the contact lens structure (1) is formed by the posterior layer (11) and the anterior layer (21) being attached to each other, and the colored portion (30) is provided at the interface (5) between the two layers (11,21).

9. The method according to any one of claims 7 and 8, wherein the colored portion (30) is provided by arranging a colored disc sandwiched between the posterior layer (11) and the anterior layer (21) or by painting an area having an aperture on an inner surface of either of the posterior layer (11) and the anterior layer (12).

10. The method according to any one of the preceding claims, wherein the colored portion (30) is formed as part of an electronic component provided in the contact lens structure (1).

11. The method according to any one of the preceding claims, wherein the contact lens structure (1) comprises an air chamber (40) arranged inside the contact lens structure, and wherein the colored portion (30) is provided in connection with the air chamber.

12. A contact lens structure (1) comprising
a back surface (10) configured to, at least partly, be in contact with the eye (2) of a user when in use, wherein the back surface (10) is shaped based on information of a shape of the eye of the user such that the contact lens structure (1) is rotationally and translationally stable when in use on the eye of the user;
a front surface (20) opposite said back surface (10); and
a colored portion (30) arranged between the back surface (10) and the front surface (20), wherein the colored portion (30) comprises an aperture (32, 32a-3).

13. The contact lens structure (1) according to claim 12, wherein the colored portion (30) is a painted surface with the aperture (32, 32a-e), or a colored disc with the aperture (32, 32a-e) arranged inside the contact lens structure (1).

14. The contact lens structure (1) according to any one of claims 12-13, wherein the contact lens structure (1) comprises a posterior layer (11) and an anterior layer (21), wherein the back surface (10) is part of the posterior layer (11) and the front surface (20) is part of the anterior layer (21), and wherein the colored portion (30) is arranged between the posterior layer (11) and the anterior layer (21).

15. The contact lens structure (1) according to any one of claims 12-14, wherein the contact lens structure (1) comprises an air chamber (40) arranged inside the contact lens structure, and wherein the colored portion (30) is arranged in connection with the air chamber.
